# EUROPEAN PATENT APPLICATION

(11) **EP 3 282 819 A1**
(43) Date of publication of application: **14.02.2018**
(21) Application number: 15886522.0
(22) Date of filing: 25.12.2015
(51) Int. Cl.: H05H 1/24, C02F 1/50

(54) **PLASMA GENERATION METHOD AND STERILE WATER PRODUCTION METHOD**

(30) Priority: 20.03.2015 JP 2015058015
(71) Applicant: NGK Insulators, Ltd., Nagoya-shi, Aichi 467-8530 (JP)
(72) Inventor: YOKOYAMA Takashi, Nagoya-shi Aichi 467-8530 (JP); TANGE Shoji, Nagoya-shi Aichi 467-8530 (JP); SHIMIZU Hideki, Nagoya-shi Aichi 467-8530 (JP); YAMADA Kazunari, Nagoya-shi Aichi 467-8530 (JP)
(74) Representative: Naylor, Matthew John
(86) International application number: PCT/JP2015/086329
(87) International publication number: WO 2016/151970

(57) **Abstract**

The present invention relates to a plasma generation method and a sterile water production method. A pulse voltage (Pv) is repeatedly applied between first electrodes (12A) and second electrodes (12B) to which a gas is fed, a plasma is generated between the first electrodes (12A) and the second electrodes (12B), and an active species is produced in the plasma. The energy necessary for plasma generation is set at 1.8-8.5 W/cm³.

## Description

### Technical Field

The present invention relates to a plasma generation method as well as to a sterile water production method using the plasma generation method.

### Background Art

Conventionally, a method has been proposed for atomizing water in the atmosphere (to a particle diameter of 3 to 100 nm), and thereby producing charged fine particle water containing one or more radicals selected from among hydroxyl radical, superoxide, nitric oxide radical, and oxygen radical, together with one or more radicals selected from among nitric acid, nitric acid hydrate, nitrous acid, and nitrous acid hydrate (see Japanese Patent No. 4608513).

Further, a sterilization method and an ion generating device have been proposed for sterilizing airborne bacteria by releasing ions generated in the atmosphere, namely, H⁺(H₂O)ₘ (where m is an arbitrary natural number) and O²⁻(H₂O)ₙ (where n is an arbitrary natural number) (see Japanese Patent No. 3680121). According to the technique described in Japanese Patent No. 3680121, an alternating voltage having an effective value of 1.1 kV to 1.4 kV is applied between electrodes to thereby generate ions. Furthermore, according to Japanese Patent No. 3680121, an air conditioning device is proposed in which an ozone sensor is disposed in the vicinity of an ion generating device, and at least one of an effective value of an AC voltage and a delivery amount of air is made variable, so that the ozone concentration is controlled to be less than or equal to a constant value (an ozone concentration of 0.1 ppm or less).

### Summary of Invention

However, in Japanese Patent No. 4608513, no investigations are conducted concerning the degree to which active species (for example, an active species such as a bactericidal active substance) are produced by the generated plasma, and the concentration of other substances apart therefrom.

In Japanese Patent No. 3680121, a concentration of ozone is regulated to be less than or equal to a constant value. However, due to the fact that ions are generated by applying an alternating voltage between the electrodes, a problem occurs in that it is difficult to adjust the ozone concentration. Further, there is also a problem in that it is difficult to adjust the concentration of nitrogen oxide.

The present invention has been devised taking into consideration the aforementioned problems, and has the object of providing a plasma generation method in which it is possible to easily adjust the degree to which an active species is generated by the plasma, and it is possible to set the concentration of ozone and nitrogen oxide to a low level.

Further, another object of the present invention is to provide a sterile water production method in which a high bactericidal capacity is obtained by using as a bactericidal active substance an active species in an amount proportional to the input energy by utilizing the above plasma generation method, and which additionally enables sterilization with little or no damage to the usage environment and constituent components or the like.
[1] A plasma generation method according to a first aspect of the present invention is characterized by a plasma generation method for producing an active species in a plasma, by applying a voltage between a first electrode and a second electrode to which a gas is supplied, and generating the plasma between the first electrode and the second electrode, including the steps of repeatedly applying a pulsed voltage between the first electrode and the second electrode, and setting an input energy necessary for generating the plasma to a value greater than or equal to 1.8 W/cm³ and less than or equal to 8.5 W/cm³.
[2] In the first aspect of the present invention, the gas may be atmospheric air.
[3] In the first aspect of the present invention, the input energy may be set by adjusting at least one from among a pulse width, a peak voltage, and a pulse frequency of the pulsed voltage.
[4] In this case, the input energy preferably is set by adjusting the pulse width to a value from 50 to 5000 nsec, adjusting the peak voltage to a value from 15 to 35 kV, and adjusting the pulse frequency to a value from 0.5 to 50 kHz.
[5] In the first aspect of the present invention, the input energy preferably is set in a manner so that a concentration of ozone in the plasma is less than or equal to 50 ppm, and a concentration of nitrogen oxide in the plasma is less than or equal to 1000 ppm.
[6] In the first aspect of the present invention, at least one of the first electrode and the second electrode is preferably formed integrally together with a ceramic. However, both of the electrodes may be made of metal.
[7] A sterile water production method according to a second aspect of the present invention is characterized by a sterile water production method for producing sterile water by supplying a plasma to water, wherein the plasma is generated using a plasma generation method for producing an active species in the plasma, by applying a voltage between a first electrode and a second electrode to which a gas is supplied, and generating the plasma between the first electrode and the second electrode, including the steps of repeatedly applying a pulsed voltage between the first electrode and the second electrode, and setting an input energy necessary for generating the plasma to a value greater than or equal to 1.8 W/cm³ and less than or equal to 8.5 W/cm³.
[8] In the second aspect of the present invention, a principal bactericidal active substance of the sterile water preferably is the active species from the plasma, which is dissolved in the water.
[9] In the second aspect of the invention, preferably a concentration of ozone in the water is less than or equal to 5 ppm, and a total concentration of nitrate nitrogen and nitrite nitrogen in the water is less than or equal to 80 mg/L.

In accordance with the plasma generation method according to the present invention, it is possible to easily adjust the degree to which an active species is generated by the plasma, and it is possible to set the concentration of ozone and nitrogen oxide to a low level. Further, the active species can be obtained in an amount proportional to the input energy.

In accordance with the sterile water production method according to the present invention, a high bactericidal capacity is obtained by using as a bactericidal active substance an active species in an amount proportional to the input energy by utilizing the above plasma generation method, and additionally it is possible to sterilize a target object with little or no damage to the usage environment and constituent components or the like.

### Brief Description of Drawings

FIG. 1A is a plan view showing principal parts of an electrode structure that is used in a plasma generation method according to the present embodiment as viewed from above, and FIG. 1B is a perspective view thereof;
FIG. 2A is a cross-sectional view taken along line IIA-IIA in FIG. 1A, and FIG. 2B is an enlarged view showing a partially omitted section of a first electrode (second electrode);
FIG. 3 is a graph showing changes in a degree (amount of generation) to which an active species is generated, as well as concentrations of ozone and nitrogen oxide, with respect to an input energy required to generate plasma;
FIG. 4A is a waveform diagram showing an example of a rectangular pulsed voltage waveform, and FIG. 4B is a waveform diagram showing an example of a triangular pulsed voltage waveform;
FIG. 5 is an explanatory view showing an example of a sterile water production method according to the present embodiment in which the electrode structure is used;
FIG. 6 is a configuration diagram showing in outline form an experimental apparatus used in first to fourth exemplary embodiments;
FIG. 7A is a diagram showing the structure of a discharge electrode portion in the experimental apparatus as viewed from the front, and FIG. 7B is a cross-sectional view taken along line VIIB-VIIB in FIG. 7A;
FIG. 8 is a circuit diagram showing the configuration of a pulsed power supply in the experimental apparatus;
FIG. 9 is a waveform diagram showing a pulsed voltage waveform and a current waveform generated by the pulsed power supply;
FIG. 10 is a graph showing evaluation results, and more specifically, changes in ozone concentration and NOx concentration with respect to input energy, according to a first exemplary embodiment;
FIG. 11 is a graph showing evaluation results, and more specifically, changes in a number of surviving bacteria with respect to input energy, according to a second exemplary embodiment;
FIG. 12 is a graph showing evaluation results, and more specifically, changes in ozone concentration and NOx concentration with respect to input energy, according to a third exemplary embodiment;
FIG. 13 is a graph showing evaluation results, and more specifically, changes in ozone concentration and NOx concentration with respect to input energy, according to a fourth exemplary embodiment;
FIG. 14 is a configuration diagram showing in outline form an experimental apparatus used in a fifth exemplary embodiment; and
FIG. 15 is a graph showing evaluation results, and more specifically, changes in ozone concentration and nitric acid concentration with respect to input energy, according to a fifth exemplary embodiment.

### Description of Embodiments

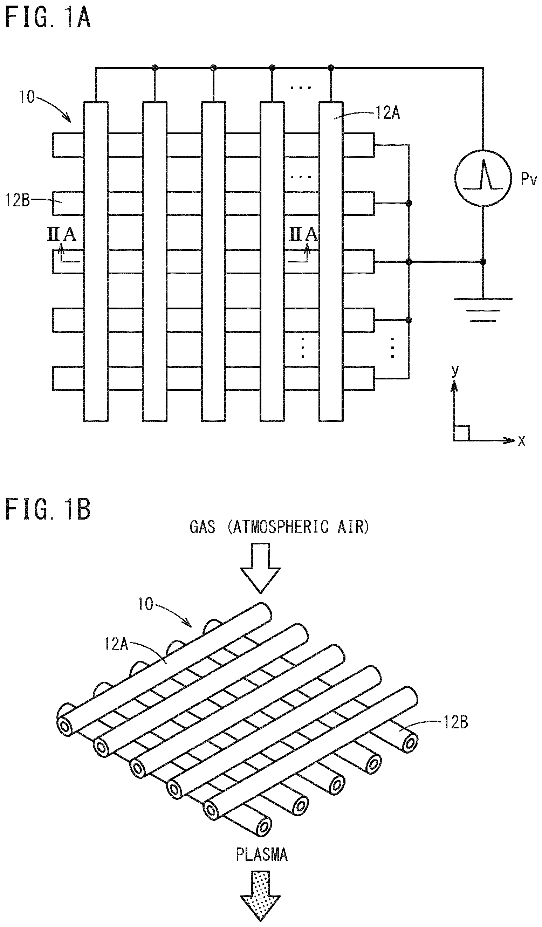

Exemplary embodiments of a plasma generation method and a sterile water production method according to the present invention will be described in detail below with reference to FIGS. 1A to 15.

The plasma generation method according to the present embodiment utilizes an electrode structure 10 shown in FIGS. 1A and 1B, for example.

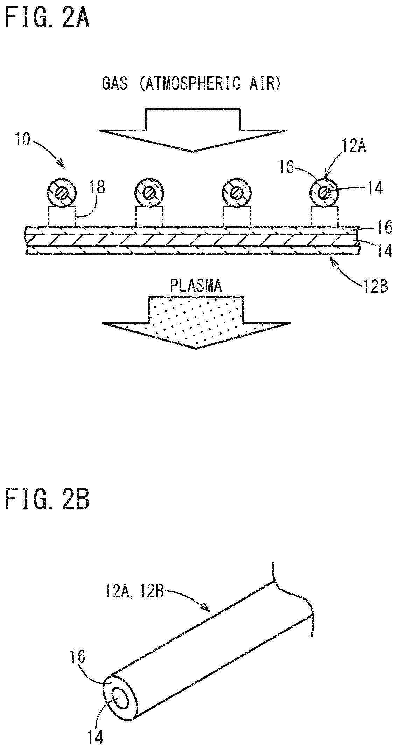

The electrode structure 10 includes a plurality of rod-shaped first electrodes 12A, which extend in a first direction (y-direction), and are arranged in a second direction (x-direction) orthogonal to the first direction, and a plurality of rod-shaped second electrodes 12B, which extend in the second direction (x-direction), and are arranged in the first direction (y-direction). As shown in FIGS. 2A and 2B, each of the first electrodes 12A and the second electrodes 12B includes a rod-shaped conductor 14 and a ceramic 16 that covers the conductor 14. The diameter of the conductor 14 is preferably from 10 to 1000 µm, and the thickness of the ceramic 16 is preferably from 10 to 500 µm. As the conductor 14, any of copper, iron, tungsten, stainless steel, platinum, and the like can be used. As the ceramic 16, any of alumina, silica, titania, zirconia, and the like can be used.

Further, as shown in FIGS. 1A and 1B, in the electrode structure 10, the plurality of first electrodes 12A and the plurality of second electrodes 12B face mutually toward each other, and the first electrodes 12A and the second electrodes 12B are maintained in a positional relationship (a skew positional relationship) in which the first electrodes 12A and the second electrodes 12B intersect one another when viewed from a direction in which a gas flows with respect to the electrode structure 10.

In such a positional relationship, the gas is supplied, for example, in a direction from the first electrodes 12A toward the second electrodes 12B, and a pulsed voltage (hereinafter referred to as a pulsed voltage Pv) is applied repeatedly between the first electrodes 12A and the second electrodes 12B, whereby a plasma (atmospheric plasma) is generated in a space between the first electrodes 12A and the second electrodes 12B, and more specifically, as shown in FIG. 2A, the plasma is generated in the atmosphere at intersecting portions of the first electrodes 12A and the second electrodes 12B. The intersecting portions serve as plasma generating locations 18. The generated plasma travels in a direction away from the second electrodes 12B along the flow of gas. In addition to generating an active species in the plasma, ozone and nitrogen oxide are also generated therein.

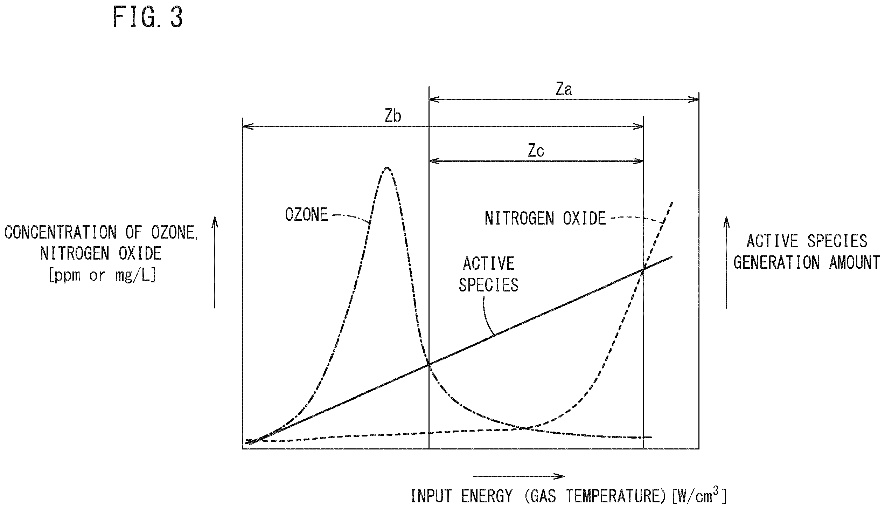

In this instance, changes in the amount of generation of the active species as well as the concentrations of ozone and nitrogen oxide with respect to the input energy required to generate the plasma are shown in FIG. 3. In FIG. 3, characteristics of the active species are indicated by the solid line, characteristics of the ozone are indicated by the one-dot-dashed line, and characteristics of the nitrogen oxide are indicated by the dashed line. As shown in FIG. 3, accompanying an increase of the input energy, the amount at which the active species are generated increases substantially linearly. On the other hand, the concentration of ozone increases steeply accompanying the increase of the input energy, develops a peak during an initial stage of the input energy, and steeply decreases thereafter. The concentration of nitrogen oxide increases gradually accompanying the increase of the input energy, and then increases steeply from a region around where the concentration of ozone decreases gradually.

In addition, in the plasma generation method according to the present embodiment, the input energy is set in the following manner.
(a) The input energy is set to a size such that the concentration of ozone generated in the plasma becomes less than or equal to the amount at which the active species are generated. In FIG. 3, such a range is indicated by Za.
(b) The input energy is set to a size such that the concentration of nitrogen oxide generated in the plasma becomes less than or equal to the amount at which the active species are generated. In FIG. 3, such a range is indicated by Zb.
(c) The input energy is set to a size so that the concentration of ozone and the concentration of nitrogen oxide generated in the plasma both become less than or equal to the amount at which the active species are generated. In FIG. 3, such a range is indicated by Zc.

Moreover, in items (a) or (c) mentioned above, the input energy may be set to a size at which the ozone generated in the plasma is decomposed by the plasma gas temperature.

In addition, the input energy preferably is set in a manner such that the concentration of ozone generated in the plasma is less than or equal to 50 ppm, and the concentration of nitrogen oxide generated in the plasma is less than or equal to 1000 ppm.

According to the present embodiment, due to the fact that the pulsed voltage Pv is repeatedly applied between the first electrodes 12A and the second electrodes 12B, preferably the following measures are taken in order to set the input energy in the manner described above.

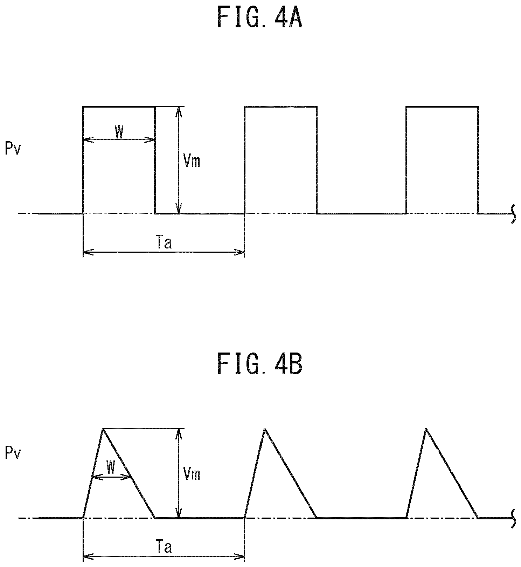

More specifically, for the waveform of the pulsed voltage Pv, there may be provided a rectangular shape (see FIG. 4A), a triangular shape (see FIG. 4B), or the like. Thus, the input energy is set by adjusting any one or more from among the pulse frequency (1/the pulse period Ta), the peak voltage Vm, and the voltage width (pulse width W) of the pulsed voltage Pv. In the case of a triangular shape, for example, a half-value width is given as the pulse width W.

Preferably, the input energy is set by adjusting the pulse width W to a value from 50 to 5000 nsec, the peak voltage Vm to a value from 15 to 35 kV, and the pulse frequency (1/Ta) to a value from 0.5 to 50 kHz.

In the foregoing manner, according to the present embodiment, since the pulsed voltage Pv is repeatedly applied between the first electrodes 12A and the second electrodes 12B, electrons in a high energy state are generated, and it is possible for the plasma to be generated at a low temperature. Further, since it is possible to set the input energy by adjusting at least one of the pulse frequency (1/Ta), the peak voltage Vm, and the voltage width (pulse width W) of the pulsed voltage Pv, it is easy to control the gas temperature (input energy) at the plasma generating locations 18 (see FIG. 2A). More specifically, the input energy can easily be adjusted so as to achieve and maintain a gas temperature region in which the ozone within the plasma (atmospheric plasma) that is generated in the atmosphere becomes decomposed at the gas temperature, and further, almost no nitrogen oxide is generated. As a result, almost no influence is exerted on the user, and moreover, electrons in a high energy state can be generated in large quantity, and therefore, for example, it is possible to generate a significant quantity of active species having a high energy effective for sterilization. Further, the active species can be obtained in an amount proportional to the input energy.

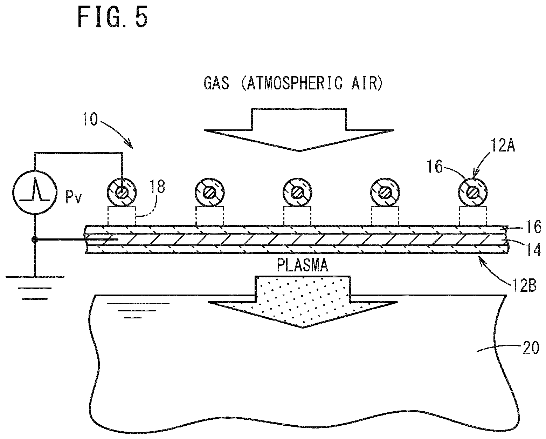

Next, a sterile water production method according to a present embodiment will be described. The sterile water production method utilizes the above-described plasma generation method. More specifically, as shown in FIG. 5, the electrode structure 10 is arranged in a manner such that the plasma generated between the first electrodes 12A and the second electrodes 12B is introduced into the water 20.

In addition, at first, a gas (atmospheric air) is supplied into the water 20 through the electrode structure 10. In such a condition, by repeatedly applying the pulsed voltage Pv between the first electrodes 12A and the second electrodes 12B, the plasma is generated at the intersecting portions (plasma generating locations 18) of the first electrodes 12A and the second electrodes 12B. The plasma instantaneously enters into the water 20 along the flow of gas, and air bubbles containing the plasma are generated in the water 20. Stated otherwise, the plasma becomes dissolved in the water 20.

In this case, since the above-described plasma generation method is used, the active species can be used as a bactericidal active substance in an amount proportional to the input energy, and sterile water exhibiting a high bactericidal effect can be produced. As the water 20, common tap water may be used.

In addition, due to the fact that almost no ozone is contained therein, corrosion of metals and deterioration of resins hardly progress at all, and it is possible for sterilization to be performed with little or no damage to the usage environment and constituent components or the like.

### [Exemplary Embodiments]

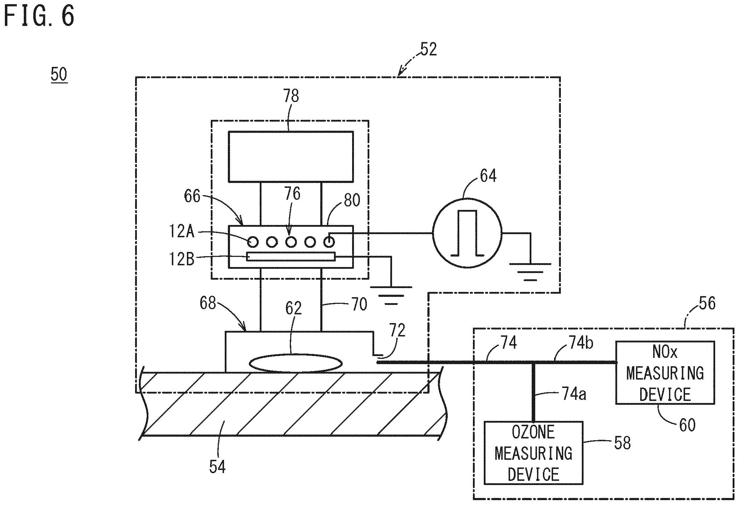

First to fifth exemplary embodiments will be described below. Prior to providing descriptions thereof, an experimental apparatus 50 which is utilized in the exemplary embodiments will be described with reference to FIGS. 6 to 9.

### [Experimental Apparatus 50]

As shown in FIG. 6, the experimental apparatus 50 includes a plasma-processing device 52, a hot plate 54, and an outlet-gas measuring unit 56.

The outlet-gas measuring unit 56 includes an ozone measuring device 58 adapted to measure the ozone in the outlet gas, and an NOx measuring device 60 adapted to measure the nitrogen oxide (hereinafter referred to as NOx) in the outlet gas. As the ozone measuring device 58, the ozone monitor EG-700 EIII manufactured by Ebara Jitsugyo Co., Ltd. was used. As the NOx measuring device 60, the gas analyzer NOA-7000 manufactured by Shimadzu Corporation was used.

A treatment object 62 to be subjected to a disinfecting or sterilization process is placed on the hot plate 54, which serves as a heating or heat retaining means. The hot plate 54 maintains the temperature of the treatment object 62 at a temperature that is higher than room temperature, for example. A heater may be used instead of the hot plate 54.

The plasma-processing device 52 includes a pulsed power supply 64 that generates high voltage pulses, a reactor 66 in which the plasma is generated by application of the high voltage pulses from the pulsed power supply 64, a processing unit 68, which is placed on the hot plate 54 at a distance from the reactor 66, and a tubular pipe 70 connecting the reactor 66 and the processing unit 68 to each other.

The pipe 70 is installed between the reactor 66 and the processing unit 68, so that air does not enter into or become mixed with the fluid (fluid containing the active species) that passes through the reactor 66. The pipe 70 and the processing unit 68 may be manufactured together integrally by a resin material (for example, an acrylic), or they may be manufactured separately from each other, and then the pipe 70 and the processing unit 68 may be combined.

The processing unit 68 has a dome-like shape, for example, having an open lower surface portion, and is mounted on the hot plate 54 in covering relation to the treatment object 62 that is placed on the hot plate 54. An outlet hole 72 is provided on a side surface of the processing unit 68. A conduit 74 is provided extending from the outlet hole 72 of the processing unit 68 to the ozone measuring device 58 and the NOx measuring device 60. The conduit 74 is bifurcated from a midsection thereof, and among the bifurcated sections, a first conduit 74a is connected to the ozone measuring device 58, and a second conduit 74b is connected to the NOx measuring device 60.

### (Reactor 66)

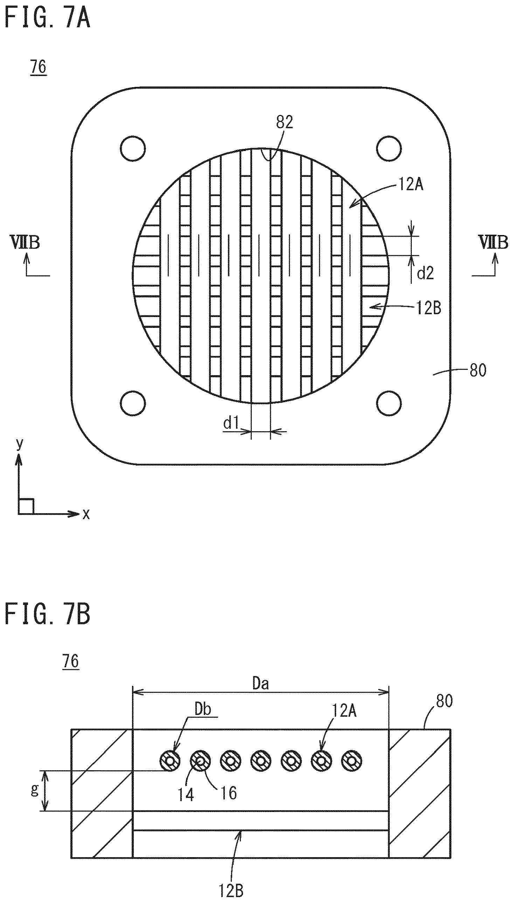

The reactor 66 includes a discharge electrode unit 76 having the first electrodes 12A and the second electrodes 12B (see FIGS. 7A and 7B) and that causes a discharge to be generated between the first electrodes 12A and the second electrodes 12B on the basis of the supply of high voltage pulses from the pulsed power supply 64, and a flow straightening section 78 for causing air supplied from the exterior to flow to the discharge electrode unit 76.

As shown in FIG. 7A, the discharge electrode unit 76 includes six of the first electrodes 12A, which extend in a first direction (y-direction), and are arranged in a second direction (x-direction) orthogonal to the first direction, six of the second electrodes 12B, which extend in the second direction, and are arranged in the first direction, and a casing 80 that retains the first electrodes 12A and the second electrodes 12B in a predetermined positional relationship. The casing 80 has a circular through hole 82 formed in the center thereof, and the first electrodes 12A and the second electrodes 12B are exposed through the through hole 82. A diameter Da of the through hole 82 (see FIG. 7B) is 30 mm.

As shown in FIG. 7B, each of the first electrodes 12A and the second electrodes 12B includes a rod-shaped conductor 14, and a ceramic 16 that covers the conductor 14. A diameter Db of the first electrodes 12A and the second electrodes 12B is 1 mm. An interval d1 between the first electrodes 12A and an interval d2 between the second electrodes 12B are each 2 mm, respectively (see FIG. 7A). A gap g formed between the first electrodes 12A and the second electrodes 12B is 4 mm (see FIG. 7B).

Accordingly, a volume of a portion of the discharge electrode unit 76 where discharging takes place, or stated otherwise, a discharge volume, can be determined by multiplying the area of the opening of the through hole 82 of the casing 80 by the gap g (= 0.4 cm) formed between the first electrodes 12A and the second electrodes 12B. In the present example, the discharge volume is 1.5 × 1.5 × π × 0.4 = 2.83 cm³.

### (Pulsed Power Supply 64)

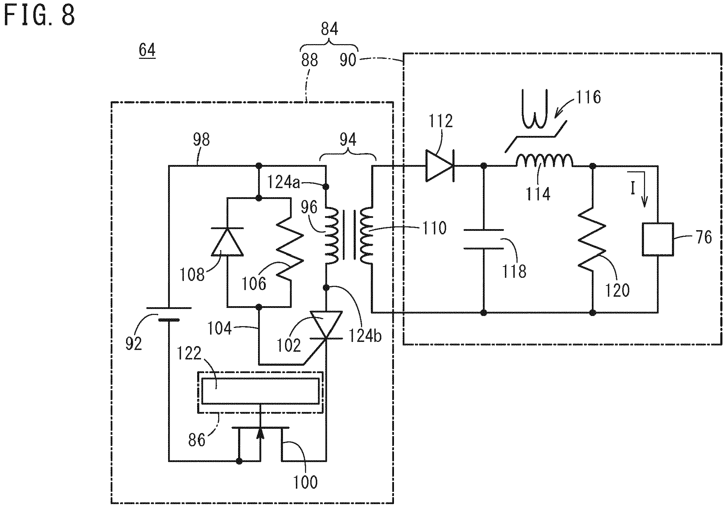

As shown in FIG. 8, the pulsed power supply 64 includes a pulse generating unit 84 for applying the pulsed voltage Pv between the first electrodes 12A and the second electrodes 12B (see FIG. 6), and a pulse control unit 86 that controls the pulse generating unit 84 so as to generate a discharge between the first electrodes 12A and the second electrodes 12B.

The pulse generating unit 84 includes a pulse generating circuit 88 and a magnetic pulse compression circuit 90. The pulse generating circuit 88 includes a DC power supply 92, a transformer 94 for storing inductive energy, and a MOSFET (Metal Oxide Semiconductor Field Effect Transistor) 100 and an SI thyristor 102 that open and close a direct current supply path 98 to a primary winding 96 of the transformer 94. Further, the pulse generating circuit 88 includes a resistor 106 connected through a biasing path 104 to the gate of the SI thyristor 102, and a diode 108 connected in parallel with the resistor 106, and moreover, which suppresses flow of current into the gate of the SI thyristor 102, and allows current to flow out from the gate of the SI thyristor 102.

The magnetic pulse compression circuit 90 includes a diode 112 for regulating the flow of an output current flowing through a secondary winding 110 of the transformer 94, in one direction, a reset circuit 116 including a saturable reactor 114 connected in series with the diode 112, a capacitor 118 connected in parallel with the secondary winding 110 at an upstream stage of the reset circuit 116, and a resistor 120 connected in parallel with the secondary winding 110 at a downstream stage of the reset circuit 116. The discharge electrode unit 76 is connected between output terminals on the secondary side.

On the other hand, the pulse control unit 86 includes a drive circuit 122 for driving the MOSFET 100.

The SI thyristor 102 and the MOSFET 100 are inserted in series in the supply path 98, in a manner so as to close the supply path 98 when turned on, and to open the supply path 98 when turned off. One end 124a of the primary winding 96 is connected to a positive electrode of the DC power supply 92, an anode of the SI thyristor 102 is connected to another end 124b of the primary winding 96, a cathode of the SI thyristor 102 is connected to the drain of the MOSFET 100, and the source of the MOSFET 100 is connected to a negative electrode of the DC power supply 92. The gate of the SI thyristor 102 is connected by the biasing path 104 to the one end 124a of the primary winding 96 via a parallel circuit made up of the diode 108 and the resistor 106. A cathode of the diode 108 is connected to the one end 124a of the primary winding 96, and an anode of the diode 108 is connected to the gate of the SI thyristor 102.

In addition, when input of an ON signal from the drive circuit 122 to the MOSFET 100 is started, and the MOSFET 100 is then turned on, the gate of the SI thyristor 102 becomes positively biased, and the SI thyristor 102 is turned on as well. Consequently, the supply path 98 is closed. When the supply path 98 is closed, supply of direct current to the primary winding 96 is started, and an accumulation of inductive energy in the transformer 94 begins to occur.

When input of the ON signal from the drive circuit 122 to the MOSFET 100 is completed, and the MOSFET 100 is turned off, the gate of the SI thyristor 102 becomes negatively biased by an induced electromotive force generated in the primary winding 96, and the SI thyristor 102 is turned off at high speed as well. Consequently, the supply path 98 is opened at high speed. When the supply path 98 is opened at high speed, an induced electromotive force is generated in the secondary winding 110 due to mutual induction, and the pulsed voltage Pv, which exhibits a considerably large rate of increase over time dV/dt of a rising voltage V, is output from the secondary winding 110 and between the first electrodes 12A and the second electrodes 12B.

Further detailed principles of operation of the pulsed power supply 64 are described, for example, in "Ultrashort Pulse Generating Circuit (IES Circuit) by SI Thyristor," by Katsuji IIDA and Takeshi SAKUMA, Symposium of SI Devices, proceedings (2002).

In addition, the pulse width of the pulsed voltage Pv can be adjusted by changing the inductance of the saturable reactor 114, the capacitance value of the capacitor 118, and/or the resistance value of the resistor 120 of the magnetic pulse compression circuit 90. The peak voltage of the pulsed voltage Pv can be adjusted by changing the breaking current value of the SI thyristor 102. The pulse frequency of the pulsed voltage Pv can be adjusted by changing the switching frequency of the drive circuit 122.

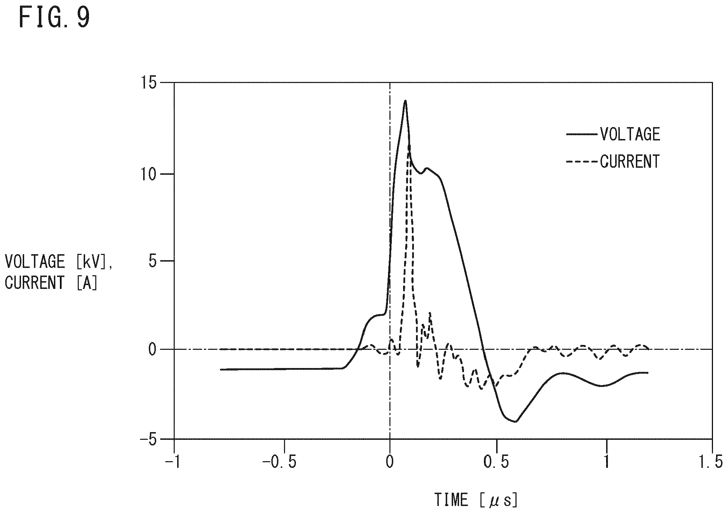

Moreover, a voltage waveform (waveform of the pulsed voltage Pv) and a current waveform, which are produced by the pulsed power supply 64, are shown in FIG. 9. In FIG. 9, the waveform of the pulsed voltage Pv is shown for a case in which the peak voltage of the pulsed voltage Pv is 14 kV, and the pulse width thereof is 500 nsec.

### [First Exemplary Embodiment] (Pulse Width)

### <Experimental Method>

Air is introduced into the discharge electrode unit 76 in a state in which a treatment object 62 is not placed in the processing unit 68. In addition, plasma is generated by the discharge in the discharge electrode unit 76, and an excited substance (active species) is led into the processing unit 68 together with air. Ozone and NOx generated at this time were measured respectively by the ozone measuring device 58 and the NOx measuring device 60.

In the first exemplary embodiment, concerning Samples 1 to 3, changes in the ozone concentration and the nitrogen oxide concentration at times when the input energy was changed by adjusting the pulse width of the pulsed voltage Pv applied between the first electrodes 12A and the second electrodes 12B were confirmed. The plasma treatment time was set to 20 minutes.

### (Sample 1)

In sample 1, the power was set to 5 W by adjusting the pulse width to 50 nsec, the peak voltage to 15 kV, and the pulse frequency to 1 kHz. More specifically, the input energy (power/discharge volume) was set to 1.8 W/cm³.

### (Sample 2)

In sample 2, the power was set to 13 W by adjusting the pulse width to 500 nsec, the peak voltage to 21 kV, and the pulse frequency to 1 kHz. More specifically, the input energy was set to 4.6 W/cm³.

### (Sample 3)

In sample 3, the power was set to 24 W by adjusting the pulse width to 5000 nsec, the peak voltage to 35 kV, and the pulse frequency to 1 kHz. More specifically, the input energy was set to 8.5 W/cm³.

### (Evaluation)

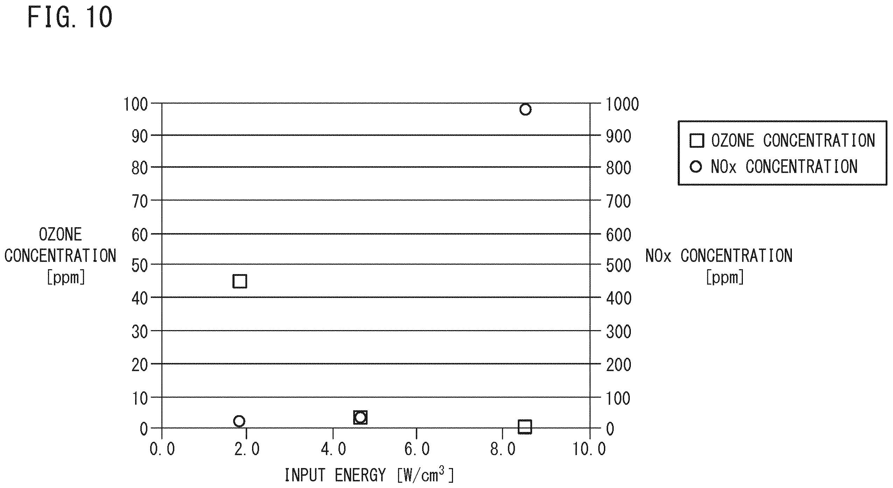

A breakdown of items and evaluation results (ozone concentration and NOx concentration) of Samples 1 to 3 are shown in the following Table 1 and in FIG. 10.

**Table 1**

| SAMPLE | Power (A) | Discharge Volume (B) | Pulse Width | Peak Voltage | Pulse Frequency | Unput Energy (= A/B) | Ozone Concentration | NOx Concentration |
|---|---|---|---|---|---|---|---|---|
| | [W] | [cm³] | [nsec] | [kV] | [kHz] | [W/cm³] | [ppm] | [ppm] |
| 1 | 5 | 2.83 | 50 | 15 | 1 | 1.8 | 48 | 12 |
| 2 | 13 | 2.83 | 500 | 21 | 1 | 4.6 | 3 | 30 |
| 3 | 24 | 2.83 | 5000 | 35 | 1 | 8.5 | 1 | 94 0 |

As understood from Table 1 and FIG. 10, in order to set the ozone concentration to be less than or equal to 50 ppm and the NOx concentration to be less than or equal to 1000 ppm, preferably, the input energy is set to be greater than or equal to 1.8 W/cm³ and less than or equal to 8.5 W/cm³. Further, it can be understood that a preferable range for the pulse width is from 50 to 5000 nsec.

### [Second Exemplary Embodiment] (Number of Surviving Bacteria)

### <Experimental Method>

This time, air is introduced into the discharge electrode unit 76 in a state in which a treatment object 62 is placed in the processing unit 68. In addition, plasma is generated by the discharge in the discharge electrode unit 76, and an excited substance (active species) is applied to the treatment object 62 together with air to thereby disinfect or sterilize the treatment object 62. Ozone and NOx generated at this time were measured respectively by the ozone measuring device 58 and the NOx measuring device 60, and the number of surviving bacteria remaining on the treatment object 62 was counted.

### <Evaluation of Number of Surviving Bacteria>

Colonies were counted according to the following procedure, using as the treatment object 62 biological indicators made of stainless steel (manufactured by Mesa labs), which were coated with Geobacillus stearothermophilus ATCC 7953 having a bacterial count of 2.4 × 106 CFU.
(a) 5 ml of 0.1% Polyoxyethylene (20) Sorbitan Monooleate (manufactured by Wako Pure Chemical Industries, Ltd.) is transferred into each test tube.
(b) Biological indicators (after disinfection or sterilzation thereof) were introduced into the respective test tubes each having the aforementioned 0.1% Polyoxyethylene (20) Sorbitan Monooleate therein, and after being subjected to an ultrasonic treatment for 3 to 5 minutes, stirring is performed for 5 minutes.
(c) 5 ml of purified water is added and stirring is performed for 5 minutes, and then after subjecting the test tube to a heat shock at 95 to 100°C for 15 minutes, the test tube is rapidly cooled to 0 to 4°C.
(d) 2 µ1 of the bacterial solution (as a sample) in the test tube is applied with a glass rod to an agar medium, and allowed to incubate at 55 to 60°C for 48 hours in an incubator.
(e) Colonies formed on the agar medium are counted.
(f) The number of surviving bacteria is calculated on the basis of the number of colonies formed and the dilution ratio.

In the second exemplary embodiment, concerning Samples 4 to 6, changes in the ozone concentration and the nitrogen oxide concentration and a change in the number of surviving bacteria (CFU) at times when the input energy was changed by adjusting the pulse width of the pulsed voltage Pv applied between the first electrodes 12A and the second electrodes 12B were confirmed. The plasma treatment time was set to 20 minutes.

### (Samples 4 to 6)

In Samples 4, 5, and 6, the power was set to 5 W, 13 W, and 24 W, respectively, by adjusting the pulse width, peak voltage, and pulse frequency to the same pulse width, peak voltage, and pulse frequency as those of Samples 1, 2, and 3 of the first exemplary embodiment. More specifically, the input energy (power/discharge volume) was set to 1.8 W/cm³, 4.6 W/cm³, and 8.5 W/cm³.

### (Evaluation)

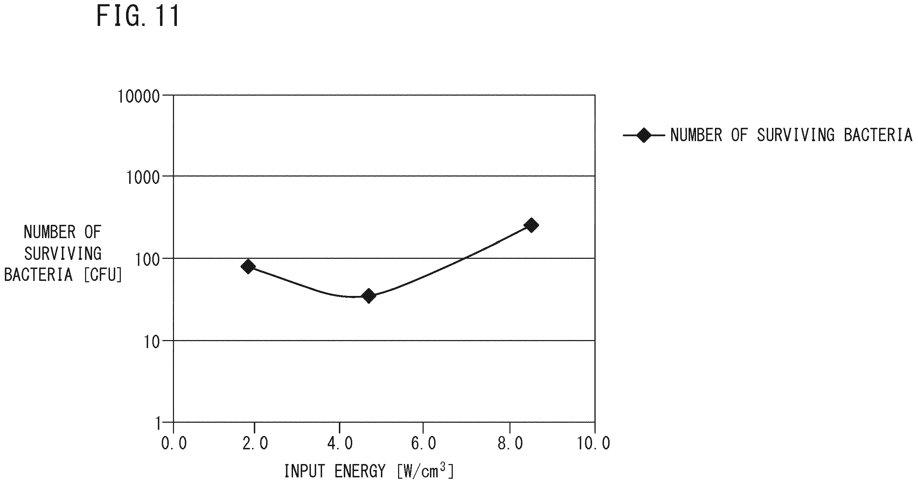

A breakdown of items and evaluation results (ozone concentration, NOx concentration, and the number of surviving bacteria) of Samples 4 to 6 are shown in the following Table 2. The ozone concentration and the NOx concentration were the same as the results of Samples 1 to 3 of the first exemplary embodiment described above. Accordingly, in FIG. 11, only results of the number of surviving bacteria are shown.

**Table 2**

| SAMPLE | Power (A) | Discharge volume (B) | Pulse Width | Peak Voltage | Pul se Frequency | Input Energy (= A/B) | Ozone Concentration | NOx Concentration | Surviving Bacteria |
|---|---|---|---|---|---|---|---|---|---|
| | [W] | [cm³] | [nsec] | (kV) | [kHz] | [W/cm³] | [ppm] | [ppm] | [CFU] |
| 4 | 5 | 2.83 | 50 | 15 | 1 | 1.8 | 48 | 12 | 80 |
| 5 | 13 | 2.83 | 500 | 21 | 1 | 4.6 | 3 | 30 | 35 |
| 6 | 24 | 2.83 | 5000 | 35 | 1 | 8.5 | 1 | 940 | 250 |

As understood from Table 2 and FIG. 11, in order for the number of surviving bacteria to be less than or equal to 250 CFU, preferably, the input energy is set to be greater than or equal to 1.8 W/cm³ and less than or equal to 8.5 W/cm³. In this case, the pulse width preferably resides within a range from 50 to 5000 nsec.

### [Third Exemplary Embodiment] (Peak Voltage)

Similar to the first exemplary embodiment discussed above, experiments were conducted in a state in which a treatment object 62 was not placed in the processing unit 68. In addition, in the third exemplary embodiment, concerning Samples 7 to 9, changes in the ozone concentration and the nitrogen oxide concentration at times when the input energy was changed by adjusting the peak voltage of the pulsed voltage Pv applied between the first electrodes 12A and the second electrodes 12B were confirmed. The plasma treatment time was set to 20 minutes.

### (Sample 7)

In sample 7, the power was set to 5 W by adjusting the peak voltage to 15 kV, the pulse width to 500 nsec, and the pulse frequency to 1 kHz. More specifically, the input energy was set to 1.8 W/cm³.

### (Samples 8 and 9)

In Samples 8 and 9, the power was set to 13 W and 24 W using the same conditions as in Sample 7, apart from the fact that the peak voltage was set to 21 kV and 35 kV. More specifically, the input energy was set to 4.6 W/cm³ and 8.5 W/cm³.

### (Evaluation)

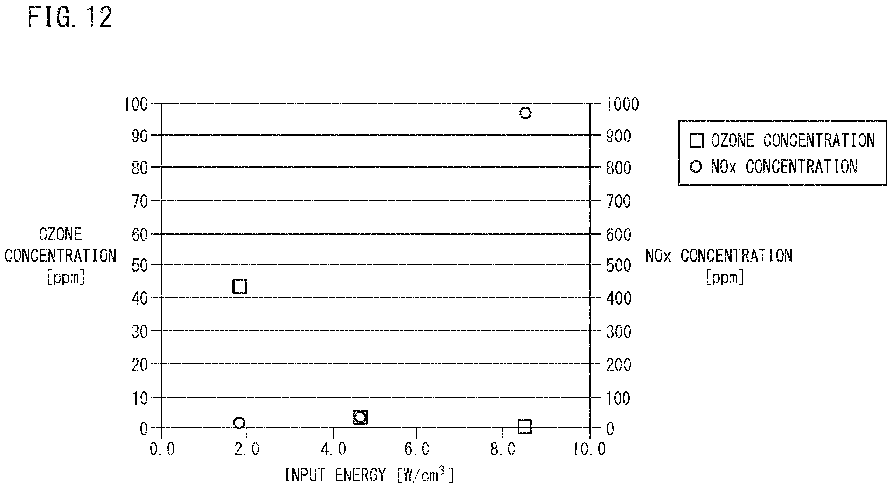

A breakdown of items and evaluation results (ozone concentration and NOx concentration) of Samples 7 to 9 are shown in the following Table 3 and in FIG. 12.

**Table 3**

| SAMPLE | Power (A) | Discharge volume (B) | Pulse Width | Peak Voltage | Pulse Frequency | Input Energy (= A/B) | Ozone Concentration | NOx Concentration |
|---|---|---|---|---|---|---|---|---|
| | [W] | [cm³] | [nsec] | [kV] | [kHz] | [W/cm³] | [ppm] | [ppm] |
| 7 | 5 | 2.83 | 500 | 15 | 1 | 1.8 | 45 | 15 |
| 8 | 13 | 2.83 | 500 | 21 | 1 | 4.6 | 3 | 30 |
| 9 | 24 | 2.83 | 500 | 35 | 1 | 8.5 | 0.5 | 980 |

As understood from Table 3 and FIG. 12, in order to set the ozone concentration to be less than or equal to 50 ppm and the NOx concentration to be less than or equal to 1000 ppm, preferably, the peak voltage is set to a range of from 15 to 35 kV.

### [Fourth Exemplary Embodiment] (Pulse Frequency)

Similar to the first exemplary embodiment discussed above, experiments were conducted in a state in which a treatment object 62 was not placed in the processing unit 68. In addition, in the fourth exemplary embodiment, concerning Samples 10 to 12, changes in the ozone concentration and the nitrogen oxide concentration at times when the input energy was changed by adjusting the pulse frequency of the pulsed voltage Pv applied between the first electrodes 12A and the second electrodes 12B were confirmed. The plasma treatment time was set to 20 minutes.

### (Sample 10)

In Sample 10, the power was set to 5 W by adjusting the pulse frequency to 0.5 kHz, the peak voltage to 15 kV, and the pulse width to 500 nsec. More specifically, the input energy was set to 1.8 W/cm³.

### (Samples 11 and 12)

In Samples 11 and 12, the power was set to 13 W and 24 W using the same conditions as in Sample 10, apart from the fact that the pulse frequency was set respectively to 1 kHz and 50 kHz. More specifically, the input energy was set to 4.6 W/cm³ and 8.5 W/cm³.

### (Evaluation)

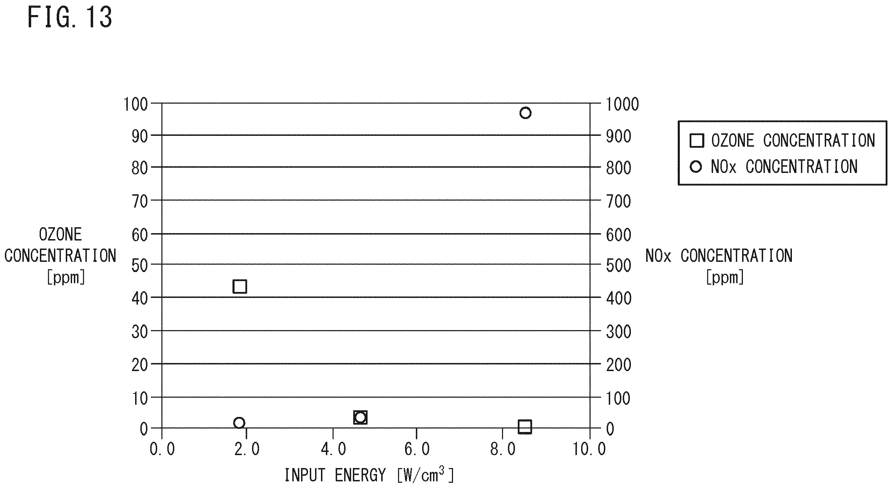

A breakdown of items and evaluation results (ozone concentration and NOx concentration) of Samples 10 to 12 are shown in the following Table 4 and in FIG. 13.

**Table 4**

| SAMPLE | Power (A) | Discharge Volume (8) | Pulse Width | Peak Voltage | Pulse Frequency | Input: Energy (= A/B) | Ozone Concentration | NOx Concentration |
|---|---|---|---|---|---|---|---|---|
| | [W] | [cm³] | [nsec] | [kV] | [kHz] | [W/cm³] | [ppm] | [ppm] |
| 10 | 5 | 2.83 | 500 | 15 | 0.5 | 1.8 | 44 | 10 |
| 11 | 13 | 2.8.3 | 500 | 21 | 1 | 4.6 | 3 | 30 |
| 12 | 24 | 2.83 | 500 | 35 | 50 | 8.5 | 0.2 | 970 |

As understood from Table 4 and FIG. 12, in order to set the ozone concentration to be less than or equal to 50 ppm and the NOx concentration to be less than or equal to 1000 ppm, preferably, the pulse frequency is set to a range of from 0.5 to 50 kHz.

### [Fifth Exemplary Embodiment] (Sterile Water)

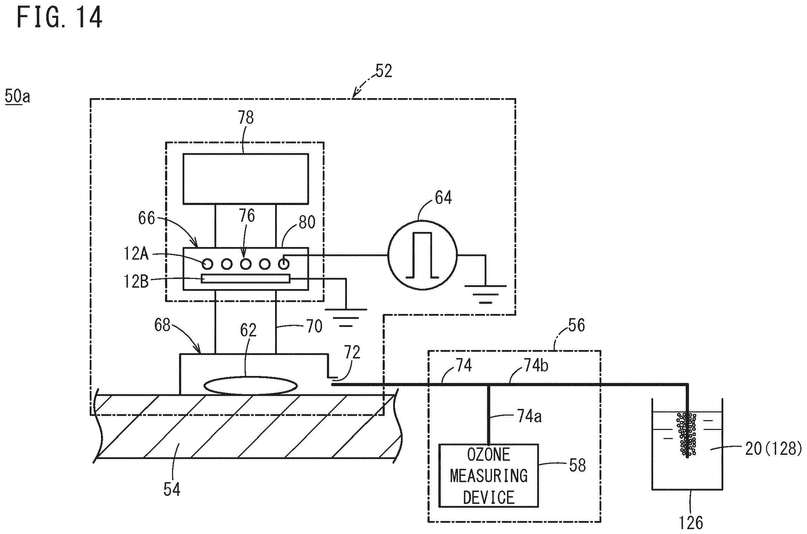

As shown in FIG. 14, in an experimental apparatus 50a of the fifth exemplary embodiment, a beaker 126 containing 50 cc of water 20 was prepared. In addition, the NOx measuring device 60 (see FIG. 6) was removed from the second conduit 74b, a tip end of the second conduit 74b was placed in the water 20 inside the beaker 126, and the gas from the reactor 66 (a gas containing an active species produced by the plasma) was injected into the water 20 to thereby produce sterile water 128.

Similar to the first exemplary embodiment discussed above, experiments were conducted in a state in which a treatment object 62 was not placed in the processing unit 68. In addition, in the fifth exemplary embodiment, concerning Samples 13 to 15, change in the ozone concentration of the gas from the reactor 66 and change in the total value of the concentrations of nitrate nitrogen and nitrite nitrogen (hereinafter referred to as a "nitric acid concentration") of the sterile water 128 in the beaker 126 at times when the input energy was changed were confirmed. The plasma treatment time was set to 20 minutes.

### (Sample 13)

In Sample 13, the power was set to 5 W by adjusting the pulse frequency to 1 kHz, the peak voltage to 20 kV, and the pulse width to 500 nsec. More specifically, the input energy was set to 1.8 W/cm³.

### (Sample 14)

In Sample 14, the power was set to 13 W by adjusting the pulse frequency to 5 kHz, the peak voltage to 21 kV, and the pulse width to 500 nsec. More specifically, the input energy was set to 4.6 W/cm³.

### (Sample 15)

In Sample 15, the power was set to 24 W by adjusting the pulse frequency to 10 kHz, the peak voltage to 22 kV, and the pulse width to 500 nsec. More specifically, the input energy was set to 8.5 W/cm³.

### (Evaluation)

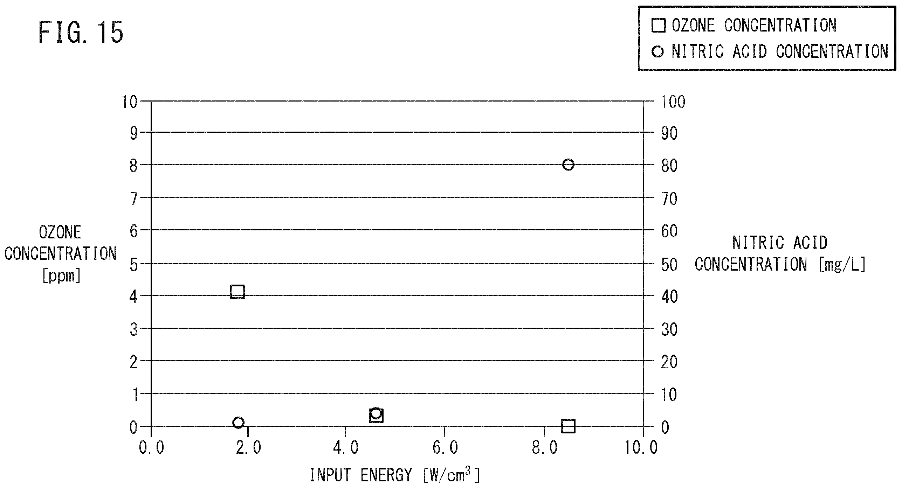

A breakdown of items and evaluation results (ozone concentration and nitric acid concentration) of Samples 13 to 15 are shown in the following Table 5 and in FIG. 15.

**Table 5**

| SAMPLE | Power (A) | Discharge Volume (B) | Pulse Width | Peak Voltage | Pulse Frequency | Input Energy (= A/B) | Ozone Concentration | Nitric Acid Concentration |
|---|---|---|---|---|---|---|---|---|
| | [w] | [cm³] | [nsec] | [kV] | [kHz] | [W/cm³] | [ppm] | [mg/L] |
| 13 | 5 | 2.83 | 500 | 20 | 1 | 1.8 | 4.1 | 1 |
| 14 | 13 | 2.83 | 500 | 21 | 5 | 4.6 | 0.3 | 4 |
| 15 | 24 | 2.83 | 500 | 22 | 10 | 8.5 | 0.01 | 80 |

As understood from Table 5 and FIG. 15, in order to set the ozone concentration to be less than or equal to 5 ppm and the nitric acid concentration to be less than or equal to 80 mg/L, preferably, the input energy is set to be greater than or equal to 1.8 W/cm³ and less than or equal to 8.5 W/cm³, and more preferably, greater than or equal to 1.8 W/cm³ and less than or equal to 4.6 W/cm³.

The plasma generation method and the sterile water production method according to the present invention are not limited to the embodiments described above, and it goes without saying that various configurations could be adopted therein without departing from the essence and gist of the present invention.

## Claims

1. A plasma generation method for producing an active species in a plasma, by applying a voltage between a first electrode (12A) and a second electrode (12B) to which a gas is supplied, and generating the plasma between the first electrode (12A) and the second electrode (12B), comprising the steps of:
repeatedly applying a pulsed voltage (Pv) between the first electrode (12A) and the second electrode (12B); and
setting an input energy necessary for generating the plasma to a value greater than or equal to 1.8 W/cm³ and less than or equal to 8.5 W/cm³.

2. The plasma generation method according to claim 1, wherein the gas is atmospheric air.

3. The plasma generation method according to claim 1 or 2, wherein the input energy is set by adjusting at least one from among a pulse width (W), a peak voltage (Vm), and a pulse frequency (1/Ta) of the pulsed voltage (Pv) .

4. The plasma generation method according to claim 3, wherein the input energy is set by adjusting the pulse width (W) to a value from 50 to 5000 nsec, adjusting the peak voltage (Vm) to a value from 15 to 35 kV, and adjusting the pulse frequency (1/Ta) to a value from 0.5 to 50 kHz.

5. The plasma generation method according to any one of claims 1 to 4, wherein the input energy is set in a manner so that a concentration of ozone in the plasma is less than or equal to 50 ppm, and a concentration of nitrogen oxide in the plasma is less than or equal to 1000 ppm.

6. The plasma generation method according to any one of claims 1 to 5, wherein at least one of the first electrode (12A) and the second electrode (12B) is formed integrally together with a ceramic.

7. A sterile water production method for producing sterile water by supplying a plasma to water, wherein the plasma is generated using a plasma generation method for producing an active species in the plasma, by applying a voltage between a first electrode (12A) and a second electrode (12B) to which a gas is supplied, and generating the plasma between the first electrode (12A) and the second electrode (12B), comprising the steps of:
repeatedly applying a pulsed voltage (Pv) between the first electrode (12A) and the second electrode (12B); and
setting an input energy necessary for generating the plasma to a value greater than or equal to 1.8 W/cm³ and less than or equal to 8.5 W/cm³.

8. The sterile water production method according to claim 7, wherein a principal bactericidal active substance of the sterile water is the active species from the plasma, which is dissolved in the water.

9. The sterile water production method according to claim 7 or 8, wherein a concentration of ozone in the water is less than or equal to 5 ppm, and a total concentration of nitrate nitrogen and nitrite nitrogen in the water is less than or equal to 80 mg/L.
